# EUROPEAN PATENT APPLICATION

(11) **EP 2 790 437 A1**
(43) Date of publication of application: **15.10.2014**
(21) Application number: 12857464.7
(22) Date of filing: 13.12.2012
(51) Int. Cl.: H04W 28/06

(54) **METHOD, DEVICE AND BASE STATION FOR WIRELESS COMMUNICATION**

(30) Priority: 13.12.2011 CN 201110425822
(71) Applicant: Huawei Technologies Co., Ltd, Shenzhen, Guangdong 518129 (CN)
(72) Inventor: HAN, Guanglin, Shenzhen Guangdong 518129 (CN); ZHANG, Jian, Shenzhen Guangdong 518129 (CN)
(74) Representative: Epping - Hermann - Fischer
(86) International application number: PCT/CN2012/086591
(87) International publication number: WO 2013/087015

(57) **Abstract**

The present invention provides a method and a device for wireless communication and a base station. The method comprises: identifying a data packet satisfying a preset condition in received data packets; adopting a first discard strategy to the identified data packet; wherein, the first discard strategy includes: using a first discard timer for the identified data packet, and discarding, when the first discard timer expires, the identified data packet; wherein, compared with a second discard timer used on a data packet dissatisfying the preset condition, a timing length of the first discard timer is longer than a timing length of the second discard timer; or, the first discard strategy includes: discarding the identified data packet only until a protocol data unit corresponding to the identified data packet is transmitted successfully or has been delivered to a corresponding bottom layer. By using the solution, reliable transmission of a preset specific data packet can be ensured.

## Description

The present application claims the priority of Chinese Application No. 201110425822.0, filed in Chinese Patent Office on December 13, 2011, and entitled "METHOD AND DEVICE FOR WIRELESS COMMUNICATION AND BASE STATION", the entire contents of which are herein incorporated by reference.

### TECHNICAL FIELD

The present invention relates to a wireless communication technology, and particularly, to a method and a device for wireless communication and a base station.

### BACKGROUND

An existing transmission of user plane data of LTE generally adopts a mode of dynamically scheduling basic air interface resources. Using such mode to perform a data transmission, only when an evolved base station (eNodeB) schedules a resource to a user equipment (UE, User Equipment), the UE may send uplink data or receive downlink data; when no resource is scheduled to the UE, the UE may not perform a data transceiving. Under the condition that a UE cannot perform a data transceiving as no resource is scheduled to the UE, for an uplink direction, the UE may merely cache uplink data which needs to be sent and wait an eNodeB to schedule and allocate a sending resource of the uplink data. For a downlink direction, an eNodeB caches downlink data, and waits for an allocation of a sending resource of the downlink data. And a UE monitors a data transmission indicating channel and receives data on a corresponding downlink resource when it receives a receiving indication of the downlink data.

In order to avoid that data is cached too long in an eNodeB or a UE, a timer of cache time of a data packet, namely a discard timer (DT, Discard Timer), is configured in a packet data convergence protocol (PDCP, Packet Data Convergence Protocol) layer of an Long Term Evolution (LTE, Long Term Evolution) system. For a UE, a timing length of the timer is configured by an eNodeB. When a PDCP layer of an eNodeB or a UE receives a data packet which needs to be transmitted, the PDCP layer starts a discard timer for the data packet. When the timer expires, the PDCP layer discards the current data packet and indicates a radio link control (RLC, Radio Link Control) layer to discard the data packet. With respect to the RLC layer, if the data packet is not yet sent, it discards the data packet; and if the RLC layer has sent or is sending the data packet, the data packet is not discarded and is continuously sent.

The above-mentioned data transmission method in prior art, for all data packets, discards a data packet under the condition that the data packet is not yet sent and a discard timer for the data packet expires, thereby possibly causing a decline of a system performance as some specific data packets cannot be received timely by a UE side or a network side.

### SUMMARY

In view of the above-mentioned deficiencies of the prior art, embodiments of the present invention provide a method and a device for a wireless communication and a base station, which, in a transmission or a forwarding of data, identify a specific data packet and adopt a specific transmission or forwarding strategy to it to ensure reliable receiving of the specific data packet.

An embodiment of the present invention provides a method for a wireless communication, comprising: identifying a data packet satisfying a preset condition in received data packets; adopting a first discard strategy to the identified data packet, wherein, the first discard strategy includes: adopting a first discard timer for the identified data packet, and discarding, when the first discard timer expires, the identified data packet, wherein, compared with a second discard timer adopted for a data packet dissatisfying the preset condition, a timing length of the first discard timer is longer than a timing length of the second discard timer; or, the first discard strategy includes: discarding the identified data packet only until a protocol data unit corresponding to the identified data packet is transmitted successfully or only until a protocol data unit corresponding to the identified data packet has been delivered to a corresponding bottom layer.

An embodiment of the present invention provides a method for a wireless communication, comprising: receiving a data packet and a discard indication for the data packet, which are sent by an upper layer; not discarding, if the received data packet is a data packet satisfying a preset condition, the data packet; otherwise, discarding, if the data packet is an data packet dissatisfying the preset condition and a protocol data unit corresponding to the data packet has not been transmitted, the data packet.

An embodiment of the present invention further provides a method for a wireless communication, being applied to a handover process, comprising: identifying, by a source base station, a data packet satisfying a preset condition in data packets to be forwarded; forwarding, by the source base station, merely the identified data packet to a target base station, or forwarding, by the source base station, the identified data packet to the target base station in priority.

An embodiment of the present invention further provides a method for a wireless communication, being applied to a handover process, comprising: estimating, by a source base station, at least one of a forwarding time delay and a target air scheduling time delay; forwarding, according to the estimated time delay, if a data packet to be forwarded can arrive at a target base station or be scheduled to a user equipment before a discard timer for the data packet expires, or although a data packet to be forwarded cannot arrive at a target base station or be scheduled to a user equipment before a discard timer for the data packet expires, the data packet is a data packet satisfying a preset condition, the data packet; otherwise, not forwarding the data packet.

An embodiment of the present invention further provides a device for a wireless communication, comprising: an identifying module, configured to identify a data packet satisfying a preset condition in received data packets; a processing module, configured to adopt a first discard strategy to the identified data packet; wherein, the first discard strategy includes: using a first discard timer on the identified data packet, and discarding the identified data packet when the first discard timer expires, wherein, compared with a second discard timer adopted for the data packet dissatisfying the preset condition, a timing length of the first discard timer is longer than a timing length of the second discard timer; or, the first discard strategy includes: discarding the identified data packet only until a protocol data unit corresponding to the identified data packet is transmitted successfully or has been delivered to a corresponding bottom layer.

An embodiment of the present invention further provides a device for a wireless communication, comprising: a receiving module, configured to receive a data packet and a discard indication for the data packet, which are sent by an upper layer; an identifying module, configured to identify whether the data packet received by the receiving module is a data packet satisfying a preset condition; and a processing module, configured to not discard the data packet when the data packet received by the receiving module is a data packet satisfying the preset condition; and to discard the data packet when the data packet received by the receiving module is a data packet dissatisfying the preset condition and a protocol data unit corresponding to the data packet has not been transmitted.

An embodiment of the present invention further provides a base station, comprising: a first processing module, configured to identify a data packet satisfying a preset condition in data packets to be forwarded; and a second processing module, configured to forward merely the identified data packet to a target base station or to forward the identified data packet to the target base station in priority.

An embodiment of the present invention further provides a base station, comprising: an estimating module, configured to estimate at least one of a forwarding time delay and a target air scheduling time delay; and a forwarding module, configured to forward, according to the estimated time delay, if a data packet to be forwarded can arrive at a target base station or be scheduled to a user equipment before a discard timer for the data packet expires, or although a data packet to be forwarded cannot arrive at a target base station or be scheduled to a user equipment before a discard timer the data packet expires but the data packet is a data packet satisfying a preset condition, the data packet, otherwise, not discarding the data packet.

According to the method and the device for a wireless communication in embodiments of the present invention, a data packet satisfying a preset condition is identified in an LTE air interface transmission, and different discard or forwarding strategies are adopted to the identified data packet, thereby ensuring a reliable transmission of preset specific data such as key data and avoiding a decline of system performance.

### BRIEF DESCRIPTION OF DRAWINGS

Fig. 1 is a schematic diagram of performing a data transmission by using a method for a wireless communication according to an embodiment of the present invention;
Fig. 2 is a schematic diagram of performing a data transmission by using a method for a wireless communication according to another embodiment of the present invention;
Fig. 3 is a schematic diagram of performing a data transmission by using a method for a wireless communication according to another embodiment of the present invention;
Fig. 4 is a schematic diagram of performing a data transmission by using a method for a wireless communication according to another embodiment of the present invention;
Fig. 5 is a schematic diagram of a device for a wireless communication in an embodiment of the present invention;
Fig. 6 is a schematic diagram of a device for a wireless communication in another embodiment of the present invention;
Fig. 7 is a schematic diagram of a base station in an embodiment of the present invention; and
Fig. 8 is a schematic diagram of a base station in another embodiment of the present invention.

### DESCRIPTION OF EMBODIMENTS

Embodiments of the present invention provide a solution for a wireless communication. According to the solution, a data packet satisfying a preset condition is identified by an apparatus on an apparatus side or a network side, or other node apparatus on a wireless transmission link. A first discard timer is adopted for the identified data packet. When the first discard timer expires, the identified data packet is discarded, wherein compared with a second discard timer adopted for a data packet dissatisfying the preset condition, a timing length of the first discard timer is longer than a timing length of the second discard timer. Or, for the identified data packet, it is discarded only until a protocol data unit corresponding to the identified data packet is transmitted successfully or until a protocol data unit corresponding to the identified data packet has been delivered to a corresponding bottom layer. As understood by those skilled in the art, the above-mentioned preset condition may be set according to a need and/or a specific application scenario.

Each embodiment of the present invention is described in detail below in combination with accompanying drawings.

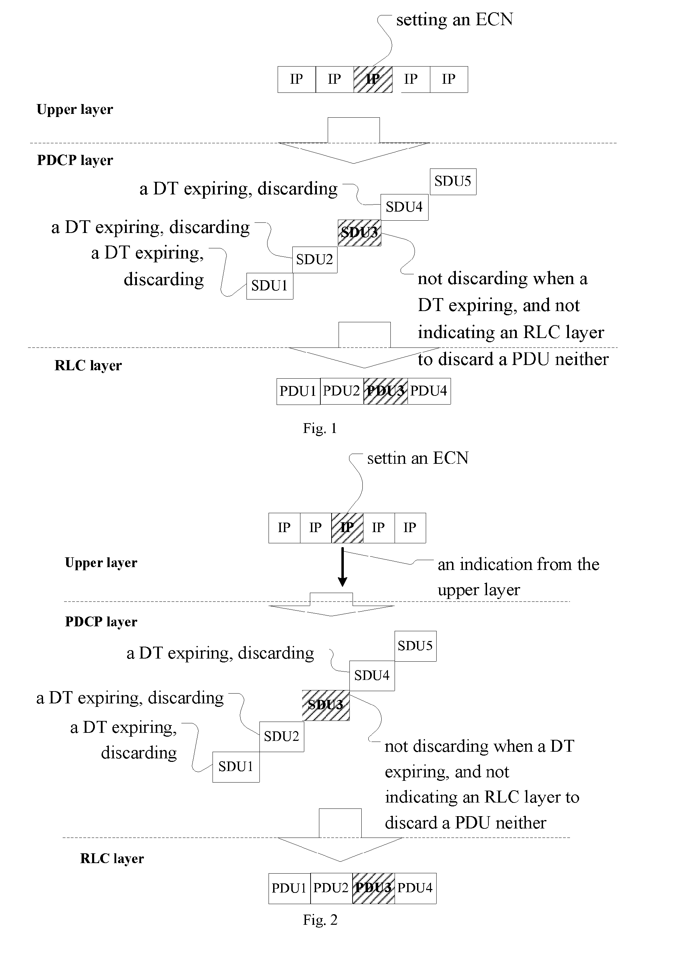

Fig. 1 is a schematic diagram of an upper layer of a PDCP layer transmitting data packets to the PDCP layer and the PDCP layer transmitting the received data packets to a lower layer of the PDCP layer in a method for a wireless communication according to an embodiment of the present invention. In this embodiment, the lower layer of the PDCP layer is exemplarily an RLC layer.

As shown in Fig. 1, data packets transmitted by an upper layer entity of the PDCP layer include a specific data packet. Indicating information for indicating that the data packet is a specific data packet is set in the specific data packet. The indicating information may be set by an upper layer entity of the PDCP layer according to a link condition of transmission or content of the data packet, or may be set, according to a link condition of transmission or content of the data packet, by other apparatus on a data packet transmission path before the data packet is transmitted to a current apparatus. Exemplarily, the indicating information may be an explicit congestion notification (ECN, Explicit Congestion Notification) indication for indicating congestion, for example, it may be set as an explicit congestion notification flag bit for indicating a congestion state; or it may be an explicit congestion notification receiving acknowledgement indication; or, it may be an indication indicating that a rate of sending has been lowered; or, it may be other indicating information specified.

When receiving a data packet, a PDCP entity in the PDCP layer detects the data packet to identify a specific data packet. If a data packet including the above-mentioned indicating information is identified, a first discard strategy is adopted for the identified data packet. The first discard strategy will be described in detail below.

In this example, take an upper layer transmits 5 IP data packets as an example. An ECN flag bit of one IP data packet therein is set for indicating congestion, that is, indicating being going through congestion. Service data units (SDU, Service Data Unit) corresponding to the 5 IP data packets, namely SDU1 to SDU5, are sequentially sent to a PDCP layer in order.

When receiving the data packets from the upper layer, a PDCP entity in the PDCP layer detects the received data packets SDU1 to SDU5. A first discard strategy is adopted to a data packet including an ECN flag bit set for indicating congestion, such as SDU3. A second discard strategy is adopted to a data packet which does not include an ECN flag bit set for indicating congestion.

Wherein, the second discard strategy includes: starting a second discard timer for a data packet, and when a second discard timing length of the second discard timer expires, discarding the data packet.

Wherein, the first discard strategy adopted to an identified data packet (a data packet including an ECN flag bit set for indicating congestion in this example) satisfying a preset condition includes: not starting a discard timer, and discarding the data packet only until a protocol data unit corresponding to the identified data packet is transmitted successfully or until a protocol data unit corresponding to the identified data packet has been delivered to a corresponding bottom layer. In this case, it is not required for a data packet including an ECN flag bit set for indicating a congestion state whether it is associated with a discard timer or which discard timer it is associated with.

Or, the first discard strategy includes: starting the discard timer, but not discarding the data packet if the discard timer expires and a protocol data unit corresponding to the data packet has not been transmitted successfully, and discarding the data packet only until the protocol data unit corresponding to the data packet is transmitted successfully. In this case, which discard timer it is associated with is not required for the data packet including an ECN flag bit set for indicating congestion. For example, a data packet including an ECN flag bit set for indicating congestion may be associated with a second timer. If, when the second discard timer expires, a protocol data unit corresponding to the data packet has not been transmitted successfully, the data packet is not discarded. The data packet is discarded only until the protocol data unit corresponding to the data packet is transmitted successfully, i.e. it is successfully transmitted to an opposite end.

Or, the first discard strategy includes: starting a first discard timer, and discarding the data packet when the first discard timer expires, wherein, the timing length of the first discard timer is longer than the timing length of the second discard timer.

Or, the first discard strategy includes: starting a discard timer, detecting whether a protocol data unit corresponding to the data packet has been delivered to a bottom layer when the discard timer expires, and discarding the data packet if it has been delivered to the bottom layer, otherwise waiting and discarding the data packet only when the protocol data unit corresponding to the data packet is delivered to the bottom layer. In this case, it is not required for the identified data packet satisfying a preset condition, such as the data packet including an ECN flag bit set for indicating a congestion state whether it is associated with a discard timer or which discard timer it is associated with.

Or, the first discard strategy includes: not starting the discard timer, and not discarding the data packet only until a protocol data unit corresponding to the data packet is delivered to a bottom layer.

Wherein, the above-mentioned discarding the data packet when the data packet is transmitted successfully may include: discarding the data packet only when a PDCP entity receives an indication of successful transmission from a bottom layer entity; or discarding the data packet only when a PDCP entity receives successful receiving acknowledgement from a packet data convergence protocol entity of an opposite end. Wherein, exemplarily, under the condition that the successful receiving acknowledgement from the opposite end or the indication of successful transmission from the bottom layer is not received, data may be resent. In a specific implementation, when a data packet is sent to an opposite end, a retransmission timer may be started for the sent data packet. If the timer expires and the protocol data unit corresponding to the data packet has not been transmitted successfully, for example, a successful receiving acknowledgement from the opposite end or an indication of successful transmission from the bottom layer is still not received, the data packet is resent.

In this way, through adopting a special discard strategy to a data packet including an ECN flag bit set for indicating congestion, it is ensured that the data packet can be reliably transmitted to an opposite end to a certain extent.

In this embodiment, exemplarily, a PDCP entity detects that the ECN flag bit in the SDU3 is set for indicating congestion, and all of the SDU1, SDU2, SDU4 and SDU5 do not include the ECN flag bit set for indicating congestion. When receiving each SDU, the PDCP entity starts a corresponding second discard timer for each SDU. As shown in Fig. 1, when the discard timers for SDU1 to SDU4 expire, the PDCP entity discards the SDU1, SDU2 and SDU4 and further indicates a lower layer to discard the PDU1, PDU2 and PDU4. The PDCP entity does not discard the SDU3 or indicate the lower layer to discard the PDU3. The data packet is discarded only until the PDCP entity receives the indication that a bottom layer entity has transmitted the data packet successfully.

Certainly, it is taken as an example for illustration in this embodiment that a data packet including an ECN flag bit set for indicating congestion is detected. Besides the indicating information, other indicating information may further be selected and set to identify a specific data packet. For a specific data packet set with other indicating information, a PDCP entity may identify the data packet by detecting received data packets likewise.

In a method for a wireless communication according to another embodiment of the present invention, a PDCP entity may determine whether the above-mentioned first discard strategy is adopted to a data packet by detecting whether a received data packet includes preset content.

That a data packet produced in a video coding process is taken as an example for illustration. In the video coding process, 3 types of frames may be generally produced, which may be divided into frame I, frame P and frame B according to the differences of content of information included in a frame. Wherein, the frame I is a primary key frame, and the video information it contains is the most. The frame P is a secondary key frame, and the information it contains is slightly less than that in the frame I. The frame B is a non-key frame which plays a role in enhancing the video quality and the information it contains is the least.

When a data packet produced in the video coding process is transmitted by using the method of this embodiment, a PDCP entity of a device on an user equipment side, a network side or other equipment on a data packet transmission path may receive an IP data packet from an upper layer, detect the received data packet, and adopt the first discard strategy to the data packet when the received data packet includes data of frame I or part of data of the frame I, otherwise, the second discard strategy is adopted to the data packet. In another example, the first discard strategy may also be adopted to the data packet when the data packet includes data of frame P or part of data of the frame P. Or, in another embodiment, the first discard strategy may be adopted for both a data packet, which includes the data of the frame I or part of the data of the frame I, and a data packet, which includes the data of the frame P or part of the data of the frame P.

In another example, a PDCP entity may further detect whether a data packet includes data or part of data of an initialized segment in a video, and the first discard strategy is adopted for the data packet when the data packet includes data or part of data of an initialized segment in a video.

In a specific implementation, the above-mentioned different embodiments may be combined. Exemplarily, in the above-mentioned data packets, a data packet including a specific frame type and a data packet including data or part of data of an initialized segment in a video may be combined for consideration. For example, by detecting a data packet, a PDCP entity may adopt the first discard strategy for both a data packet including data of frame I or part of data of frame I and a data packet including a data or part of data of an initialized segment in a video. The second discard strategy is adopted for other data packets.

Exemplarily, all of the above-mentioned data packet including an ECN flag bit set for indicating congestion, the data packet including a specific frame type and/or the data packet including data or part of data of an initialized segment in a video may further be considered in combination. For example, by detecting a data packet, a PDCP entity may adopt the first discard strategy for a data packet including an ECN flag bit set for indicating congestion, a data packet including data of frame I or part of data of frame I and a data packet including data or part of data of an initialized segment in a video. The second discard strategy is adopted for other data packets.

Fig. 2 is a schematic diagram of an upper layer of a PDCP layer transmitting data packets to a PDCP layer and the PDCP layer transmitting the received data packets to a lower layer of the PDCP layer in a method for a wireless communication according to another embodiment of the present invention. In the embodiment, the lower layer of the PDCP is exemplarily an RLC layer.

As shown in Fig. 2, when transmitting a data packet to a PDCP layer, an entity of an upper layer of the PDCP layer indicates whether the transmitted data packet is a specific data packet. For example, whether a data packet needs to adopt the above-mentioned first discard strategy is indicated. When receiving a data packet and a corresponding indication, the PDCP entity of the PDCP layer adopts the corresponding discard strategy to the received data packet according to the indication. For example, if the received data packet is a specific data packet which needs to adopt the first discard strategy according to the indication, the above-mentioned first discard strategy is adopted, otherwise, the above-mentioned second discard strategy is adopted for the received data packet.

Exemplarily, the above-mentioned indication for indicating that a transmitted data packet is a specific data packet may be an indication for indicating that the data packet satisfies at least one of the following conditions: an ECN flag bit set for indicating congestion being included in a data packet, for example, a header of the data packet, an explicit congestion notification receiving acknowledgement indication being included in a data packet, an indication of a reducing of a sending rate being included in a data packet, data of frame I or part of data of frame I in a video being included in a data packet, data of frame P or part of data of frame P in a video being included in a data packet, and data or part of data of an initialized segment in a video being included in a data packet.

It should be known for those skilled in the art that, the above-mentioned indication may be an indication for indicating that a data packet satisfying other preset conditions.

In an example, first indicating information may be used to indicate a data packet is the above-mentioned specific data packet, whereas second indicating information may be used to indicate a data packet is not the above-mentioned specific data packet. Or, first indicating information may be used to indicate a data packet is the above-mentioned specific data packet, and a data packet which is not the above-mentioned specific data packet is not indicated.

Exemplarily, there are multiple ways to perform an indication to a PDCP layer. For example, the indication may be performed through a message such as an interlayer message, or the indicating information is set by using a data packet such as a header of the data packet. Exemplarily, the above-mentioned indicating information may be provided by a method that using an existing field, an existing reserved field, an extended new field or the like. As an example, an upper layer entity of a PDCP layer may add a field for indicating content of the data packet in the data packet, e.g., when a data packet includes data of frame I or part of data of frame I, the field of the data packet is set in correspondence with the condition of indicating the data packet. When a data packet includes data of frame P or part of data of frame P, the field of the data packet is set in correspondence with the condition of indicating the data packet. When a data packet includes frame B, the field of the data packet is set in correspondence with the condition of indicating the data packet. When a data packet includes data or part of data of an initialized segment in a video, the field of the data packet is set in correspondence with the condition of indicating the data packet. In another embodiment of the present invention, a PDCP layer may not need to detect a data packet, and directly adopt the first discard strategy for the data packet according to an indication of adopting the first discard strategy to a received data packet. In other embodiments of the present invention, a data packet may be detected to identify the corresponding indicating information.

In another embodiment of the present invention, when an indication of discarding a data packet from an upper layer of a RLC layer such as a PDCP layer is received, the RLC layer may detect whether the received data packet is a specific data packet. If detecting the data packet is a preset specific data packet, the RLC entity of the RLC layer does not discard the data packet. Otherwise, if the data packet is not a specific data packet and a protocol data unit corresponding to the data packet has not been transmitted, the RLC entity discards the data packet.

Exemplarily, a RLC layer detects a received data packet to determine whether the received data packet is a specific data packet satisfying at least one of the following conditions:
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data or part of data of an initialized segment in a video being included in the data packet.

However, it should be understood for those skilled in the art that, it is not limited for a RLC entity to detect whether a data packet satisfies the above-mentioned conditions, and whether the data packet satisfies any preset condition is detected by the RLC entity according to a need.

In another embodiment of the present invention, when transmitting a data packet to a RLC layer, at the same time a PDCP layer indicates whether the data packet is a specific data packet. When receiving an indication of discarding a data packet from the PDCP layer, a RLC entity of the RLC layer determines whether a data packet is discarded according to the indication whether the above-mentioned data packet is a specific data packet. If the PDCP layer indicates that the transmitted data packet is a specific data packet, the RLC entity of the RLC layer does not discard the data packet. Otherwise, if the data packet is not a specific data packet and the data packet has not been transmitted, the RLC entity discards the data packet. Wherein, the PDCP layer may indicate whether a data packet is a specific data packet through a message such as an interlayer message or through the data packet such as a header of the data packet. Exemplarily, the above-mentioned indication may be provided by a method that using of an existing field, an existing reserved field, an extended new field or the like.

Exemplarily, a PDCP layer indicates whether a transmitted data packet is a specific data packet satisfying at least one of the following conditions:
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data or part of data of an initialized segment in a video being included in the data packet.

However, it should be understood for those skilled in the art that, it is not limited for the indication of a PDCP layer to indicate whether a data packet satisfies the above-mentioned conditions. The PDCP layer may indicate whether a data packet satisfies any preset condition according to a need.

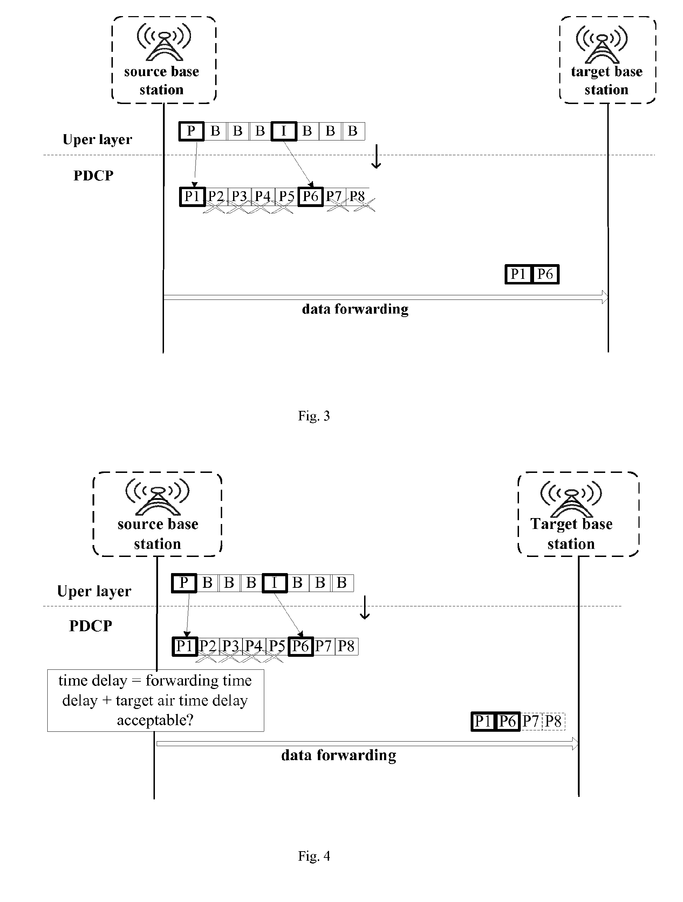

Fig. 3 is a schematic diagram of forwarding a received data packet from a PDCP layer of a source base station, such as a source evolved base station (eNodeB), to a PDCP layer of a target base station, such as a target evolved base station (eNodeB), in a handover process of the source base station and the target base station by using a method for a wireless communication according to an embodiment of the present invention. Wherein, it is taken as an example for illustration that a received data packet produced in a process of video coding is transmitted.

In this example, before forwarding a data packet, a PDCP entity of a source base station identifies whether the data packet is a preset specific data packet, and forwards the data packet to the target base station if the data packet is a preset specific data packet, otherwise, it is not forwarded. Wherein, the PDCP entity of the source base station may identify the above-mentioned specific data packet by detecting a received data packet or according to a received indication. The process of identifying the specific data packet is similar to the above-mentioned embodiments and will not be illustrated in detail herein.

Wherein, exemplarily and with no limit, a preset specific data packet may be a data packet satisfying one of the following preset conditions:
an explicit congestion notification indication for indicating congestion being included in the data packet;
an explicit congestion notification receiving acknowledgement indication being included in the data packet;
an indication of a reducing of a sending rate being include in the data packet;
data of frame I or part of data of frame I in a video being included in the data packet;
data of frame P or part of data of frame P in a video being included in the data packet; and
data or part of data of an initialized segment in a video being included in the data packet.

Exemplarily, in this example, before forwarding a data packet, the PDCP entity identifies whether the data packet including data of frame I or frame P, or part of data of frame I or frame P in a video first. If so, the data packet is forwarded, if not, the data packet is not forwarded.

Specifically, as shown in Fig. 3, in the data packets P1-P8 received from an upper layer by a PDCP layer of the source base station, P1 includes data of frame P, and P6 includes data of frame I. When identifying that P1 includes data of frame P and P6 includes data of frame I, a PDCP entity of the source base station merely forwards P1 and P6, and does not forward other data packets P2-P5, P7 and P8.

Fig. 3 shows an example that a specific data packet satisfying a preset condition is forwarded merely. But in other transformations, an identified specific data packet may be forwarded first. At this moment, P2-P5, P7 and P8 are also forwarded, but P1 and P6 are forwarded in priority.

In addition, in this example, the relation between frame I or frame P and a PDCP SDU is one-to-one. However, as known by those skilled in the art, the relation between frame I or frame P and the PDCP SDU is one-to-many.

Fig. 4 is a schematic diagram of forwarding a cached data packet from a PDCP layer of a source base station to a PDCP layer of a target base station in a handover process of the source base station and the target base station by using a method for a wireless communication according to another embodiment of the present invention. In this example, before forwarding a cached data packet, a PDCP entity of the source base station may estimate a time delay. The estimated time delay includes a forwarding time delay of forwarding a data packet from the source base station to the target base station and/or a target air scheduling time delay of scheduling a data packet from the target base station to a UE. Exemplarily, the above-mentioned forwarding time delay and target air scheduling time delay may be estimated by using forwarding information of an S1-U interface, forwarding information of an X2 interface or the like. When the time delay is estimated, according to the estimated time delay, the PDCP entity determines whether the data packet which needs to be forwarded may arrive at the target base station or be scheduled to a user equipment (UE, User Equipment) before a discard timer for the data packet expires, or may arrive at the target base station or be scheduled to the UE within a time delay range required by a quality of service (QoS, Quality of Service). If so, the data packet is forwarded. otherwise, the PDCP entity further identifies whether the data packet is a preset specific data packet. If it is a preset data packet, the data packet is forwarded, otherwise the data packet is not forwarded.

Wherein, similar to the above-mentioned embodiments, the PDCP entity may determine whether a data packet is a preset specific data packet by detecting the data packet or according to a received indication. Exemplarily, the PDCP entity may determine whether a data packet is a data packet satisfying a preset condition by detecting the data packet or according to a received indication, for example, determine whether the data packet is a data packet satisfying at least one of the above-mentioned preset conditions. In this example, a specific data packet which is a data packet including data of frame I or frame P, or part of data of frame I or frame P is taken as an example for illustration.

As shown in Fig. 4, in this example, a PDCP entity determines that the data packets P1-P6 cannot arrive at the target base station before the discard timers corresponding to P2-P5 expire. P7 and P8 may arrive at the target base station before the discard timers corresponding to them expire. And the PDCP entity identifies that P1 is a data packet including data of frame P and P6 is a data packet including data of frame I. So, finally, the PDCP entity of the source base station does not forward P2-P5, and forwards P1, P6, P7 and P8, and in the forwarded data, P1 and P6 including data of frame I or frame P may be forwarded in priority.

It should be understood for those skilled in the art that, it is not limited in the above-mentioned sequences between steps of identifying whether a data packet is a specific data packet and steps of estimating a time delay and determining whether a data packet may arrive at the target base station when a discard timer expires or within a defined range of a time delay required by QoS. In other transformations, whether a data packet is a specific data packet with a specific characteristic may be identified first.

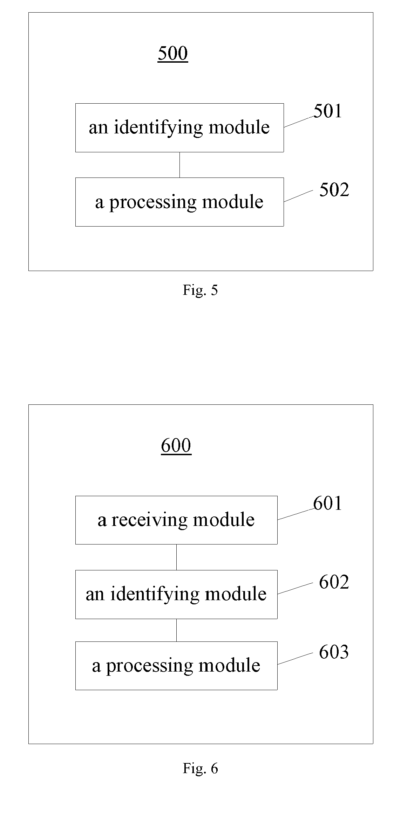

As shown in Fig. 5, an embodiment of the present invention provides a device 500 for a wireless communication, comprising: an identifying module 501, configured to identify a data packet satisfying a preset condition in received data packets; and a processing module 502, configured to adopt a first discard strategy for the identified data packet. Wherein, the first discard strategy is: using a first discard timer for the identified data packet, and discarding the identified data packet when the first discard timer expires. Wherein, compared with a second discard timer used on a data packet dissatisfying the preset condition, the timing length of the first discard timer is longer than the timing lenght of the second discard timer. Or, the first discard strategy is: discarding the identified data packet only until a protocol data unit corresponding to the identified data packet is transmitted successfully or has been delivered to a corresponding bottom layer.

It should be understood for those skilled in the art that, exemplarily with no limit, the above-mentioned identifying module and processing module may be realized in a PDCP entity or other entities which realize the function of a packet data convergence protocol layer.

In the device of the embodiment of the present invention, the preset condition may include at least one of the following conditions: an indication of adopting the first discard strategy for a data packet being received; an explicit congestion notification indication for indicating congestion being included in a data packet; an explicit congestion notification receiving acknowledgement indication being included in a data packet; an indication of a reducing of a sending rate being included in a data packet; data of frame I or part of data of frame I in a video being included in a data packet; data of frame P or part of data of frame P in a video being included in a data packet; and data or part of data of an initialized segment in a video being included in a data packet.

In the device of the embodiment of the present invention, the identifying module further identifies a data packet satisfying the preset condition by detecting received data packets or according to a received indication.

In the device of the embodiment of the present invention, the discarding the identified data packet only until the protocol data unit corresponding to the identified data packet is transmitted successfully including: not starting a discard timer for the identified data packet, and discarding the identified data packet only until the protocol data unit corresponding to the identified data packet is transmitted successfully; or, starting the discard timer for the identified data packet, and not discarding the identified data packet if, when the discard timer for the identified data packet expires, the protocol data unit corresponding to the identified data packet has not been transmitted successfully, and discarding the identified data packet only until the identified data packet is transmitted successfully.

In the device of the embodiment of the present invention, the protocol data unit corresponding to the identified data packet being transmitted successfully including: receiving an indication of successful transmission from a bottom layer; or receiving a successful receiving acknowledgement of a PDCP entity from an opposite end.

In the device of the embodiment of the present invention, the discarding the identified data packet only until the protocol data unit corresponding to the identified data packet is transmitted successfully including:
when the identified data packet is sent, starting a retransmission timer for the sent data packet, and resending the identified data packet if the protocol data unit corresponding to the identified data packet has not been transmitted successfully before the retransmission timer expires.

In the device of the embodiment of the present invention, the discarding the identified data packet only until the protocol data unit corresponding to the identified data packet has been delivered to the corresponding bottom layer including: not starting the discard timer for the identified data packet, and discarding the identified data packet only until the protocol data unit corresponding to the identified data packet has been delivered to the bottom layer; or, starting the discard timer for the identified data packet, and not discarding the identified data packet if, when the discard timer for the identified data packet expires, the protocol data unit corresponding to the identified data packet has not been delivered to the bottom layer, and discarding the identified data packet only until the protocol data unit corresponding to the identified data packet has been delivered to the bottom layer.

As shown in Fig. 6, the embodiment of the present invention further provides a device 600 for a wireless communication, comprising: a receiving module 601, configured to receive a data packet sent by an upper layer and a discard indication for the data packet; an identifying module 602, configured to identify whether the data packet received by the receiving module is the an data packet satisfying a preset condition; and a processing module 603, configured to not discard the data packet when the data packet received by the receiving module is a data packet satisfying a preset condition, and to discard the data packet when the data packet received by the receiving module is a data packet dissatisfying the preset condition and a protocol data unit corresponding to the data packet has not been transmitted.

It should be understood for those skilled in the art that, exemplarily and with no limit, the receiving module, identifying module and processing module of this embodiment may be realized in a radio link control layer entity or other entities which can realize the function of a radio link control layer.

In the device of the embodiment of the present invention, the preset condition includes one of the following conditions: an explicit congestion notification indication for indicating congestion being included in a data packet; an explicit congestion notification receiving acknowledgement indication being included in a data packet; an indication of a reducing of a sending rate being included in a data packet; data of frame I or part of data of frame I in a video being included in a data packet; data of frame P or part of data of frame P in a video being included in a data packet; and data or part of data of an initialized segment in a video being included in a data packet.

In the device of the embodiment of the present invention, the identifying module identifies whether the data packet satisfies a preset condition by detecting a received data packet or according to a received indication.

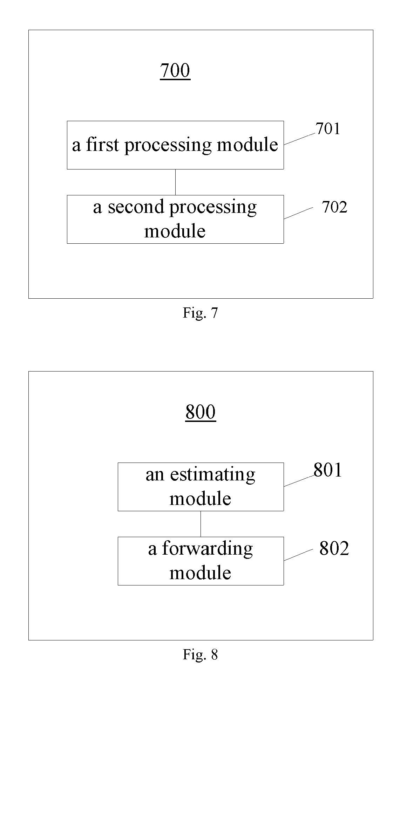

As shown in Fig. 7, the embodiment of the present invention further provides a base station 700, comprising: a first processing module 701, configured to identify a data packet satisfying a preset condition in data packets which need to be forwarded; and a second processing module 702, configured to forward merely the identified data packet to a target base station or forward the identified data packet to the target base station in priority.

In the base station of the embodiment of the present invention, the preset condition includes one of the following conditions: an explicit congestion notification indication for indicating congestion being included in a data packet; an explicit congestion notification receiving acknowledgement indication being included in a data packet; an indication of a reducing of a sending rate being included in a data packet; data of frame I or part of data of frame I in a video being included in a data packet; data of frame P or part of data of frame P in a video being included in a data packet; and data or part of data of an initialized segment in a video being included in a data packet.

As shown in Fig. 8, an embodiment of the present invention further provides a base station 800, comprising: an estimating module 801, configured to estimate at least one of a forwarding time delay and a target air scheduling time delay; and a forwarding module 802, configured to forward a data packet according to the estimated time delay if the data packet to be forwarded can arrive at a target base station or can be scheduled to user equipment before a discard timer for the data packet expires, or if the data packet to be forwarded may not arrive at the target base station or may not be scheduled to the user equipment before a discard timer for the data packet expires but the data packet is a data packet satisfying a preset condition, otherwise, the data packet is not forwarded.

In the base station of the embodiment of the present invention, the preset condition includes one of the following conditions: an explicit congestion notification indication for indicating congestion being included in a data packet; an explicit congestion notification receiving acknowledgement indication being included in a data packet; an indication of a reducing of a sending rate being included in a data packet; data of frame I or part of data of frame I in a video being included in a data packet; data of frame P or part of data of frame P in a video being included in a data packet; and data or part of data of an initialized segment in a video being included in a data packet.

It should be understood for those skilled in the art that, each entity or module included in the device may be realized by using a way of software, hardware or a hardware-software combination.

It should be understood for those skilled in the art that, various transformations and changes may be made to the method and device disclosed in embodiments of the present invention without departing from the essence of the present invention, and these modifications and variations shall fall within the protection scope of the present invention. Accordingly, the protection scope of the present invention should be defined by the appended claims.

## Claims

1. A method for wireless communication, comprising:
identifying a data packet satisfying a preset condition in received data packets;
adopting a first discard strategy to the identified data packet,
wherein, the first discard strategy includes: adopting a first discard timer for the identified data packet, and discarding, when the first discard timer expires, the identified data packet, wherein, compared with a second discard timer adopted for a data packet dissatisfying the preset condition, a timing length of the first discard timer is longer than a timing length of the second discard timer; or, the first discard strategy includes: discarding the identified data packet only until a protocol data unit corresponding to the identified data packet is transmitted successfully or only until a protocol data unit corresponding to the identified data packet has been delivered to a corresponding bottom layer.

2. The method according to claim 1, wherein the preset condition includes at least one of the following conditions:
an indication of adopting the first discard strategy to the data packet being received;
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data of an initialized segment or part of data of an initialized segment in a video being included in the data packet.

3. The method according to claim 2, wherein the identifying the data packet satisfying the preset condition in the received data packets comprises:
identifying the data packet satisfying the preset condition by detecting the received data packets or according to the received indication.

4. The method according to claim 1, wherein the discarding the identified data packet only until the protocol data unit corresponding to the identified data packet is transmitted successfully, comprises:
not starting a discard timer for the identified data packet, and discarding the identified data packet only until the protocol data unit corresponding to the identified data packet is transmitted successfully; or,
starting a discard timer for the identified data packet, and not discarding the identified data packet if, when the discard timer for the identified data packet expires, the protocol data unit corresponding to the identified data packet has not been transmitted successfully and discarding the identified data packet only until the protocol data unit corresponding to the identified data packet is transmitted successfully.

5. The method according to claim 4, wherein the successful transmission of the protocol data unit corresponding to the identified data packet comprises:
receiving an indication of successful transmission from the bottom layer; or
receiving a successful receiving acknowledgement from an opposite end.

6. The method according to claim 1, wherein the discarding the identified data packet only until the protocol data unit corresponding to the identified data packet is transmitted successfully, comprises:
starting, when the identified data packet is sent, a retransmission timer for the sent data packet, and resending, if the protocol data unit corresponding to the identified data packet has not been transmitted successfully before the retransmission timer expires, the identified data packet.

7. The method according to claim 1, wherein the discarding the identified data packet only until the protocol data unit corresponding to the identified data packet has been delivered to the corresponding bottom layer, comprises:
not starting a discard timer for the identified data packet, and discarding, only until the protocol data unit corresponding to the identified data packet has been delivered to the bottom layer, the identified data packet; or,
starting a discard timer for the identified data packet, and not discarding, if the protocol data unit corresponding to the identified data packet has not been delivered to the bottom layer when the discard timer for the identified data packet expires, the identified data packet, and discarding, only until the protocol data unit corresponding to the identified data packet has been delivered to the bottom layer, the identified data packet.

8. A method for a wireless communication, comprising:
receiving a data packet and a discard indication for the data packet, which are sent by an upper layer;
not discarding, if the received data packet is a data packet satisfying a preset condition, the data packet; otherwise, discarding, if the data packet is an data packet dissatisfying the preset condition and a protocol data unit corresponding to the data packet has not been transmitted, the data packet.

9. The method according to claim 8, wherein the preset condition includes one of the following conditions:
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data of an initialized segment or part of data of an initialized segment in a video being included in the data packet.

10. The method according to claim 8 or 9, wherein whether the data packet satisfies the preset condition is identified by detecting the received data packets or according to the received indication.

11. A method for a wireless communication, being applied to a handover process, comprising:
identifying, by a source base station, a data packet satisfying a preset condition in data packets to be forwarded;
forwarding, by the source base station, merely the identified data packet to a target base station, or forwarding, by the source base station, the identified data packet to the target base station in priority.

12. The method according to claim 11, wherein the preset condition includes one of the following conditions:
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data of an initialized segment or part of data of an initialized segment in a video being included in the data packet.

13. A method for a wireless communication, being applied to a handover process, comprising:
estimating, by a source base station, at least one of a forwarding time delay and a target air scheduling time delay;
forwarding, according to the estimated time delay, if a data packet to be forwarded can arrive at a target base station or be scheduled to a user equipment before a discard timer for the data packet expires, or although a data packet to be forwarded can not arrive at a target base station or be scheduled to a user equipment before a discard timer for the data packet expires, the data packet is a data packet satisfying a preset condition, the data packet; otherwise, not forwarding the data packet.

14. The method according to claim 13, wherein the preset condition includes one of the following conditions:
an explicit congestion notification indication for indicating congestion being included in the data packet;
an explicit congestion notification receiving acknowledgement indication being included in the data packet;
an indication that a sending rate has been lowered being included in the data packet;
data of frame I or part of data of frame I in a video being included in the data packet;
data of frame P or part of data of frame P in a video being included in the data packet; and
data of an initialized segment or part of data of an initialized segment in a video being included in the data packet.

15. A device for wireless communication, comprising:
an identifying module, configured to identify a data packet satisfying a preset condition in received data packets;
a processing module, configured to adopt a first discard strategy to the identified data packet;
wherein, the first discard strategy includes: using a first discard timer on the identified data packet, and discarding the identified data packet when the first discard timer expires, wherein, compared with a second discard timer adopted for the data packet dissatisfying the preset condition, a timing length of the first discard timer is longer than a timing length of the second discard timer; or, the first discard strategy includes: discarding the identified data packet only until a protocol data unit corresponding to the identified data packet is transmitted successfully or has been delivered to a corresponding bottom layer.

16. The device according to claim 15, wherein the preset condition includes at least one of the following conditions:
an indication of adopting the first discard strategy to the data packet being received;
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data of an initialized segment or part of data of initialized segment in a video being included in the data packet.

17. The device according to claim 16, wherein the identifying module is further configured to identify the data packet satisfying the preset condition by detecting the received data packets or according to the received indication.

18. The device according to claim 15, wherein the discarding the identified data packet only until the protocol data unit corresponding to the identified data packet is transmitted successfully comprises:
not starting a discard timer for the identified data packet, and discarding the identified data packet only until the protocol data unit corresponding to the identified data packet is transmitted successfully; or,
starting a discard timer for the identified data packet, and not discarding the identified data packet if, when the discard timer for the identified data packet expires, the protocol data unit corresponding to the identified data packet has not been transmitted successfully and discarding the identified data packet only until the protocol data unit corresponding to the identified data packet is transmitted successfully.

19. The device according to claim 18, wherein the successful transmission of the protocol data unit corresponding to the identified data packet comprises:
receiving an indication of successful transmission from the bottom layer; or
receiving a successful receiving acknowledgement from a packet data convergence protocol entity from an opposite end.

20. The device according to claim 15, wherein the discarding the identified data packet only until the protocol data unit corresponding to the identified data packet is transmitted successfully, comprises:
starting, when the identified data packet is sent, a retransmission timer for a sent data packet, and resending, if the protocol data unit corresponding to the identified data packet has not been transmitted successfully before the retransmission timer expires, the identified data packet.

21. The device according to claim 15, wherein the discarding the identified data packet only until the protocol data unit corresponding to the identified data packet has been delivered to the corresponding bottom layer, comprises:
not starting a discard timer for the identified data packet, and discarding the identified data packet only until the protocol data unit corresponding to the identified data packet has been delivered to the bottom layer; or,
starting a discard timer for the identified data packet, and not discarding the identified data packet if, when the discard timer for the identified data packet expires, the protocol data unit corresponding to the identified data packet has not been delivered to the bottom layer and discarding the identified data packet only until the protocol data unit corresponding to the identified data packet has been delivered to the bottom layer.

22. A device for a wireless communication, comprising:
a receiving module, configured to receive a data packet and a discard indication for the data packet, which are sent by an upper layer;
an identifying module, configured to identify whether the data packet received by the receiving module is a data packet satisfying a preset condition; and
a processing module, configured to not discard the data packet when the data packet received by the receiving module is a data packet satisfying the preset condition; and to discard the data packet when the data packet received by the receiving module is a data packet dissatisfying the preset condition and a protocol data unit corresponding to the data packet has not been transmitted.

23. The device according to claim 22, wherein the preset condition includes one of the following conditions:
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data of an initialized segment or part of data of an initialized segment in a video being included in the data packet.

24. The device according to claim 22 or 23, wherein the identifying module identifies whether the data packet satisfies the preset condition by detecting the received data packet or according to the received indication.

25. Abase station, comprising:
a first processing module, configured to identify a data packet satisfying a preset condition in data packets to be forwarded; and
a second processing module, configured to forward merely the identified data packet to a target base station or to forward the identified data packet to the target base station in priority.

26. The base station according to claim 25, wherein the preset condition includes one of the following conditions:
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data of an initialized segment or part of data of an initialized segment in a video being included in included in the data packet.

27. Abase station, comprising:
an estimating module, configured to estimate at least one of a forwarding time delay and a target air scheduling time delay; and
a forwarding module, configured to forward, according to the estimated time delay, if a data packet to be forwarded can arrive at a target base station or be scheduled to a user equipment before a discard timer for the data packet expires, or althouth a data packet to be forwarded can not arrive at a target base station or be scheduled to a user equipment before a discard timer the data packet expires but the data packet is a data packet satisfying a preset condition, the data packet, otherwise, not discarding the data packet.

28. The base station according to claim 27, wherein the preset condition includes one of the following conditions:
an explicit congestion notification indication for indicating congestion being included in the data packet;
an explicit congestion notification receiving acknowledgement indication being included in the data packet;
an indication of a reducing of a sending rate being included in the data packet;
data of frame I or part of data of frame I in a video being included in the data packet;
data of frame P or part of data of frame P in a video being included in the data packet; and
data of an initialized segment or part of data of an initialized segment in a video being included in the data packet.
